# EUROPÄISCHE PATENTANMELDUNG

(11) **EP 0 539 611 A1**
(43) Veröffentlichungstag der Anmeldung: **05.05.1993**
(21) Anmeldenummer: 91118297.0
(22) Anmeldetag: 26.10.1991
(51) Int. Cl.: G01N 23/223, G01N 23/20, G01N 23/203, G01B 15/02

(54) **Messvorrichtung**

(71) Anmelder: FAG Kugelfischer Georg Schäfer Aktiengesellschaft, D-97419 Schweinfurt (DE)
(72) Erfinder: Woydig, Sieghard, W-8522 Herzogenaurach (DE)
(74) Vertreter: Rehmann, Klaus H.

(57) **Zusammenfassung**

Meßvorrichtung zum Messen des Abstandes, zwischen ihr und einem beschichteten Trägermaterial, und der Stärke und/oder Masse der Beschichtung auf dem Träger, wobei die Meßvorrichtung (1) aus zwei voneinander gasdichtgetrennten Ionisationskammern (2 und 3) und einer gemeinsamen Strahlungsquelle (9) besteht.

## Beschreibung

Die Erfindung betrifft eine Meßvorrichtung die sowohl den Abstand zwischen ihr und einem beschichteten Trägermaterial als auch die Stärke der Beschichtung messen kann.

Meßvorrichtung dieser Art sind allgemein bekannt, sie bestehen beispielsweise aus einer mit Edelgas gefüllten Ionisationskammer zur Messung der Beschichtungsstärke und mindestens einem kapazitivem oder induktivem Wegsensor oder einer Laser- oder Ultraschallsonde zur Abstandsmessung.

Die "Abstandsmesser", Sensoren oder Sonden, arbeiten genau und zufriedenstellend so lange sie durch ihre Betriebsumgebung nicht beeinträchtigt werden. Eine erhebliche Beeinträchtigung erfahren diese Sensoren bzw. Sonden jedoch bei einem Einsatz in Galvannealing-Prozessen.

Galvannealing Prozesse sind Verfahren, bei denen durch nachträgliches induktives Aufheizen eines verzinkten Stahlbandes auf ca. 500 bis 600° C Eisen in die Zinkschicht diffundiert, so daß intermetallische Verbände zwischen Zink und Eisen gebildet werden. Dieser intermetallische Verband ist für die Weiterverarbeitbarkeit des beschichteten Stahls und das Haftverhalten der Zinkschicht von außerordentlich großer Bedeutung.

Durch die induktive Erhitzung des beschichteten Trägermaterials scheiden kapazitive Abstandsmeßverfahren aus. Induktive Wegsensoren müssen in unmittelbarer Nähe der induktiven Erwärmungsvorrichtung angeordnet werden und werden durch diese Vorrichtung so stark beeinträchtigt, daß keine genauen Abstandsmaße ermittelt werden können. Lasersonden scheiden wegen der nichtdifusen Reflektion induktiv erhitzter, spiegelnder Oberflächen und Ultraschallsonden aufgrund von Turbulenzen der heißen Luftumgebung aus.

Die Erfindung hat sich die Aufgabe gestellt eine gattungsgemäße Meßvorrichtung so zu verbessern, daß mit ihr unabhängig vom Herstellungsprozeß, die für die Steuerung des Herstellungsprozesses benötigten Meßwerte ermittelt werden.

Die Aufgabe wird erfindungsgemäß durch die Merkmale des Hauptanspruchs gelöst.

In weiterer Ausgestaltung des Erfindungsgedankens wird mit den Merkmalen des Anspruches 2 eine besondere kompakte Bauweise der Meßvorrichtung erzielt.

Auf der Zeichnung ist der Gegenstand der Erfindung schematisch dargestellt.

Es zeigen:
- Figur 1: einen schematischen Längsschnitt durch die Meßvorrichtung
- Figur 2: eine schematische Draufsicht auf die Meßvorrichtung.

Die mit 1 bezeichnete Meßvorrichtung weist zwei Ionisationskammern ( 2 und 3) auf, die gasdicht voneinander getrennt angeordnet sind, wobei in dem dargestellten Beispiel die Ionisationskammer 3 zentrisch in der Ionisationskammer 2 angebracht ist. Die Meßvorrichtung 1 ist in einem, bei der Kalibrierung als Null-Abstand bezeichneter Abstand A zum beschichteten Trägermaterial 4 angeordnet.

Die äußere Ionisationskammer 2 ist beispielsweise mit Argon gefüllt, so daß sie damit für die Ionisierung durch niederenergetische Strahlung bis maximal 8,63 KeV eingesetzt ist, während die innere Ionisationskammer 3 mit Krypton oder Xenon befüllt für höherenergetische Compton-Strahlung bis etwa 5o KeV geeignet ist.

In der Ionisationskammer 2 sind die aus elektrisch leitendem Material z. B. Messing bestehenden, meist eine veredelte Oberfläche (Nickelbeschichtung) aufweisenden Elektroden 5, beispielsweise 12 Stück, ringförmig angeordnet, während in der Ionisationskammer 3 die Elektrode 6 zentrisch befestigt ist. Die Ionisationskammer 3 ist durch ein, aus einer metallischen (Titan, Kupfer, Aluminium) Scheibe bestehendes Filter 7 abgeschirmt, durch welches der Anteil der **weichen** Fluoreszenzstrahlung absorbiert wird. Die äußere Ionisationskammer 2 und auch die Ionisationskammer 3 sind jeweils mit einer Folie 8 aus Aluminium bedampfter Kunststoffolie, wie sie unter den Bezeichnungen Mylar, Hostaphan etc. im Handel erhältlich sind, abgedeckt.

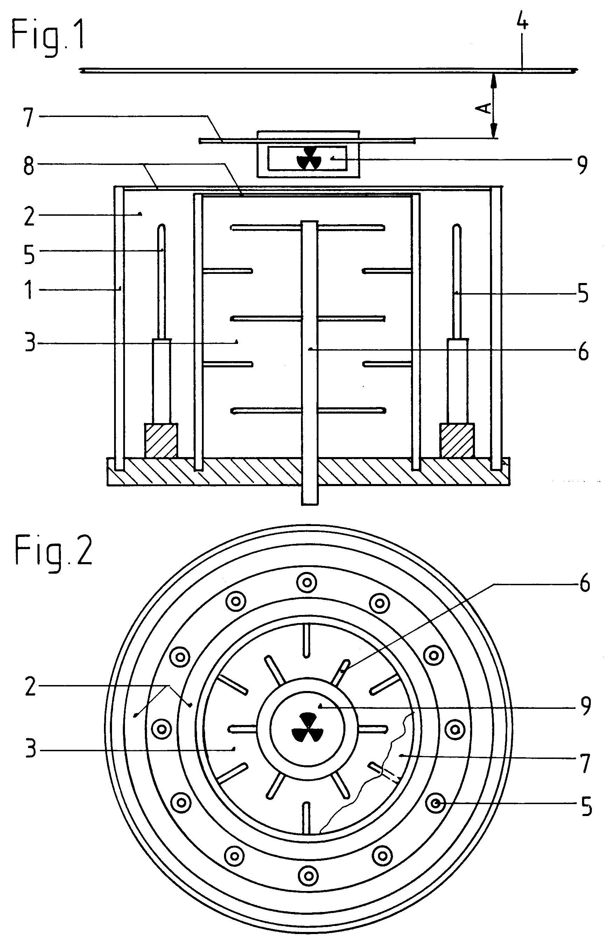

Die außerhalb der Ionisationskammer 2 und 3 angebrachte Strahlungsquelle 9, beispielsweise Americium Strahler, ist so befestigt, daß ihre Strahlen auf das beschichtete Trägermaterial 4 gerichtet sind, so daß dieses zur Fluoreszenzstrahlung angeregt wird. In dem dargestellten Beispiel (Fig. 2) ist die Strahlungsquelle 9 im Zentrum der Meßvorrichtung 1 angeordnet.

Die Fluoreszenzstrahlung mit etwa 8,6 KeV trifft als direkte Strahlung von der Beschichtung auf die Ionisationskammer 2 und 3, während die Compton Rückstrahlung aus dem Trägermaterial 4 und der Beschichtung mit ca. 50 KeV in die Ionisationskammern 2 und 3 gelangt und dort durch die Bestrahlung der unter einer vorgegebenen Hochspannung stehenden Gasräumen in den Ionisationskammer 2 und 3 positive und negative Ionen erzeugt. Je größer die Intensität der Compton-Strahlung ist, desto mehr Ionenpaare entstehen und desto höher ist der Ionisationsstrom in der jeweiligen Ionisationskammer 2 oder 3. Die jeweilige Höhe des Ionisationsstromes wird in der mit Argon gefüllten Ionisationskammer 2 für ein Signal für die Stärke der Beschichtung verwendet, während die Höhe des Ionisationsstromes in der mit Krypton oder Xenon gefüllten Ionisationskammer 3 das Signal für den Abstand A der Meßvorrichtung 1 zu dem Trägeimaterial 4.

Der Gegenstand der Erfindung geht davon aus, daß jede Strahlungsart durch Materialien höherer Ordnungszahl reflektiert wird.

Metallbleche sind als Reflektoren besonders geeignet und die Rückstreuintensität kann bei günstigem Einstrahlungswinkel bis zu 60 % der direkten Strahlungsintensität betragen.

Bei jedem vor einer Ionisationskammer angebrachten Strahler gibt es in einer bestimmten Entfernung ein Maximum der Rückstreuintensität.

Ist der Abstand zu klein, ist der Streuwinkel ungünstig, da die Rückstreuenergie im Strahler selbst und dessen Fassung absorbiert wird. Ist der Abstand zu groß nimmt die Strahlungsintensität durch das bekannte Abstandsgesetz ab.

Weiche Beta Strahler haben, da sie stärker streuen, ein Maximum bei einem Abstand zum bestrahlten Trägermaterial von ca. 11 mm, härtere Beta Strahler von ca. 20 mm und Gama Strahler von ca. 30 mm Abstand.

Das Rückstreusignal bildet, wenn auf der Abszisse der Abstand, beispielsweise in Millimeter und auf der Ordinatenachse die Intensität der Comptonstrahlung aufgetragen ist, eine Exponentialfunktion ähnlich einer Hyperbel.

Bei der Zn-Schichtmessung im Galvannealing Prozess ist ein Abstand der Meßeinrichtung vom Trägermaterial von 50 bis 60 mm erwünscht und dabei wird die Comptonstrahlung eines Americium 241 Strahlers genutzt, so daß die Comptonstrahlung die Energie der schwächer gebundenen Elektronen des Atoms nutzt, welche mit ca. 50 KeV etwas niedriger ist als die Primärenergie mit ca. 62 KeV.

Durch die Befüllung der Ionisationskammer 2 und 3 mit jeweils verschiedenen Edelgasen, beispielsweise Kammer 2 mit Nenon oder Argon und Kammer 3 mit Krypton, können beschichtete Trägermaterialien 4 mit unterschiedlichen Ordnungszahlen, in diesem Beispiel Trägermaterialien 4 mit chromatischer Lackbeschichtung, gemessen werden.

## Patentansprüche

1. Meßvorrichtung zum Messen des Abstandes, zwischen ihr und einem beschichteten Trägermaterial, und der Stärke und/oder Masse der Beschichtung auf dem Träger, dadurch gekennzeichnet, daß die Meßvorrichtung (1) aus zwei voneinander gasdichtgetrennten Ionisationskammern (2 und 3) und einer gemeinsamen Strahlungsquelle (9) besteht.

2. Meßvorrichtung nach Anspruch 1, dadurch gekennzeichnet, daß beide Ionisationskammern (2 und 3) zylinderförmig ausgebildet sind und die eine Ionisationskammer (3) zentrisch in der anderen Ionisationskammer (2) angeordnet ist.

3. Meßvorrichtung nach Anspruch 1 oder Anspruch 2, dadurch gekennzeichnet, daß die Ionisationskammer (3) mit einem Titan-Filter (7) versehen, mit Krypton oder Xenon gefüllt ist, während die Ionsisationskammer (2) mit Argon gefüllt ist.

4. Meßvorrichtung nach Anspruch 1 oder Anspruch 2, d. g., daß die Ionisationskammer (2) mit Argon oder Nenon und die Ionisationskammer (3) mit Krypton gefüllt ist.
